# EUROPEAN PATENT APPLICATION

(11) **EP 4 779 785 A1**
(43) Date of publication of application: **22.07.2026**
(21) Application number: 25864506.8
(22) Date of filing: 08.09.2025
(51) Int. Cl.: H01M 50/383, H01M 50/367, H01M 50/317

(54) **BATTERY PACK HOUSING AND BATTERY PACK COMPRISING SAME**

(30) Priority: 25.10.2024 KR 20240147309
(71) Applicant: LG ENERGY SOLUTION, LTD., Seoul 07335 (KR)
(72) Inventor: LEE, Jung Hoon, Daejeon 34122 (KR); JUNG, Hye Mi, Daejeon 34122 (KR); KIM, Kwang Mo, Daejeon 34122 (KR); LEE, Joo Hyoung, Daejeon 34122 (KR)
(74) Representative: Plasseraud IP
(86) International application number: PCT/KR2025/013886
(87) International publication number: WO 2026/089283

(57) **Abstract**

According to exemplary embodiments, a battery pack housing is provided. The battery pack housing may include: a base plate; a side wall perpendicular to the base plate; a venting device installed in a venting hole of the side wall; and a protector overlapping the venting device in a first direction and installed on an inner surface of the side wall. The protector may include first to third plates extending in a second direction perpendicular to an upper surface of the base plate. The first plate includes a plurality of first holes each having a first diameter, the second plate includes a plurality of second holes each having a second diameter, and the third plate includes a plurality of third holes each having a third diameter.

## Description

### [Technical Field]

The present disclosure relates to a battery pack housing and a battery pack. This application claims the benefit of Korean Patent Application No. 10-2024-0147309, filed on October 25, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the cruising range of battery electric vehicles (BEVs) has increased to levels comparable to fuel vehicles, the primary application of secondary batteries is shifting from mobile devices to mobility.

In the current trend where secondary batteries for mobility are emphasized, the main directions of secondary battery technology development are cost reduction and safety improvement. Secondary batteries account for the largest portion of BEV manufacturing costs. Therefore, the most important factor in increasing the market share of BEVs compared to internal combustion engine vehicles is the production cost of secondary batteries. Cost reduction can be achieved through reduction of raw materials, reduction in the number of production process steps, and reduction of takt time. The safety of secondary batteries is extremely important as it is directly related to the lives of mobility passengers. A key challenge for improving the safety of secondary batteries is providing solutions for preventing thermal propagation and thermal runaway in battery packs.

### [Summary]

### [Technical Problem]

The technical problem to be solved by the technical idea of the present disclosure is to provide a battery pack with improved safety.

### [Technical Solution]

According to exemplary embodiments of the present disclosure for solving the above-described problem, a battery pack housing is provided. The battery pack housing may include: a base plate; a side wall perpendicular to the base plate; a venting device installed in a venting hole of the side wall; and a protector overlapping the venting device in a first direction and installed on an inner surface of the side wall. The protector may include first to third plates extending in a second direction perpendicular to an upper surface of the base plate. The first plate may include a plurality of first holes each having a first diameter. The second plate may include a plurality of second holes each having a second diameter. The third plate may include a plurality of third holes each having a third diameter.

The protector may further include: a first vertical channel between the first plate and the second plate; a second vertical channel between the second plate and the third plate; and a third vertical channel between the third plate and the side wall.

The second plate may include a first connection hole connecting the first and second vertical channels. The third plate may include a second connection hole connecting the second and third vertical channels. The first connection hole and the second connection hole are spaced apart in the second direction.

The size of the first diameter, the size of the second diameter, and the size of the third diameter may be equal to each other.

A central axis of each of the first holes may be spaced apart from a central axis of each of the second holes in the second direction. A central axis of each of the second holes may be spaced apart from a central axis of each of the third holes in the second direction.

The first diameter may be larger than the second diameter. The second diameter may be larger than the third diameter.

Each of the plurality of first holes may overlap with a corresponding one of the plurality of second holes and a corresponding one of the plurality of third holes in the first direction.

Each of the first diameter, the second diameter, and the third diameter may have a size of 0.5 times or more and 0.7 times or less of a length of the venting hole of the side wall in the second direction.

The protector may include: a fourth plate connecting the first plate and the third plate and extending in the first direction to the inner surface of the side wall; and a fifth plate extending in the first direction from the second plate to the inner surface of the side wall. The fourth plate and the fifth plate may be spaced apart in the second direction. The fourth plate may include a plurality of fourth holes. The fifth plate may include a plurality of fifth holes.

A diameter of each of the plurality of fourth holes of the fourth plate may decrease as it approaches the venting device in the first direction. A diameter of each of the plurality of fifth holes of the fifth plate may decrease as it approaches the venting device in the first direction.

The protector may further include: a first edge part where the first plate and the fourth plate meet; a second edge part where the second plate and the fifth plate meet; and a third edge part where the third plate and the fourth plate meet. Each of the first edge part, the second edge part, and the third edge part may have a rounded shape.

The protector may further include: a first edge part where the first plate and the fourth plate meet; a second edge part where the second plate and the fifth plate meet; and a third edge part where the third plate and the fourth plate meet. Each of the first edge part, the second edge part, and the third edge part may include a dust discharge hole.

The battery pack housing may further include: a first fixing part perpendicular to and connected with the fourth plate; and a second fixing part perpendicular to and connected with the fifth plate. Each of the first fixing part and the second fixing part may be fixed on the inner surface of the side wall.

### [Advantageous Effects]

According to exemplary embodiments of the present disclosure, by securing an extended flow path for heat inside the battery pack, thermal propagation and thermal runaway of the battery pack can be prevented.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a top view of a battery pack housing according to exemplary embodiments.
FIG. 2 is a cross-sectional view of a battery pack housing according to exemplary embodiments.
FIG. 3 is an enlarged cross-sectional view of a protector according to exemplary embodiments.
FIG. 4 is an exploded perspective view of a protector according to exemplary embodiments.
FIG. 5 is a cross-sectional view of first to third plates according to exemplary embodiments.
FIG. 6 is a cross-sectional view of first to third plates according to exemplary embodiments.
FIG. 7 is an enlarged cross-sectional view of a protector according to exemplary embodiments.
FIG. 8 is an enlarged cross-sectional view of a protector according to exemplary embodiments.
FIG. 9 is a top view of a battery pack according to exemplary embodiments.
FIG. 10 is a cross-sectional view of a battery pack according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

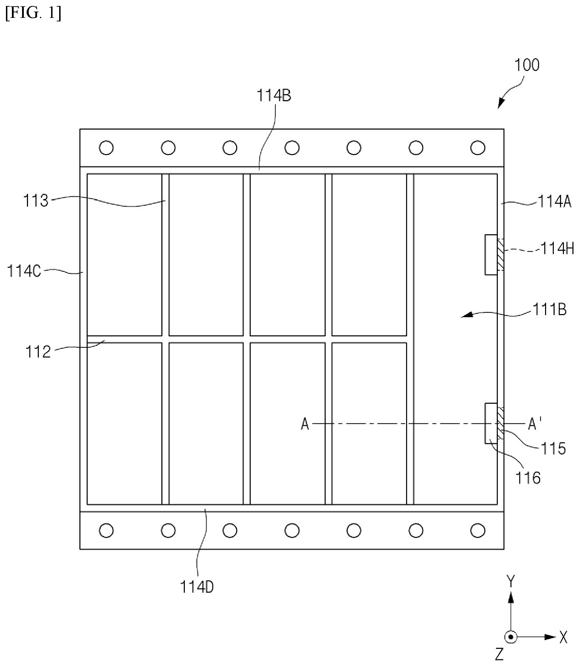

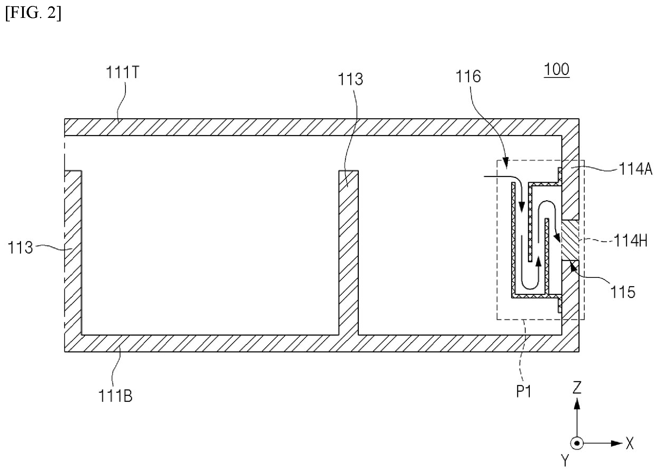

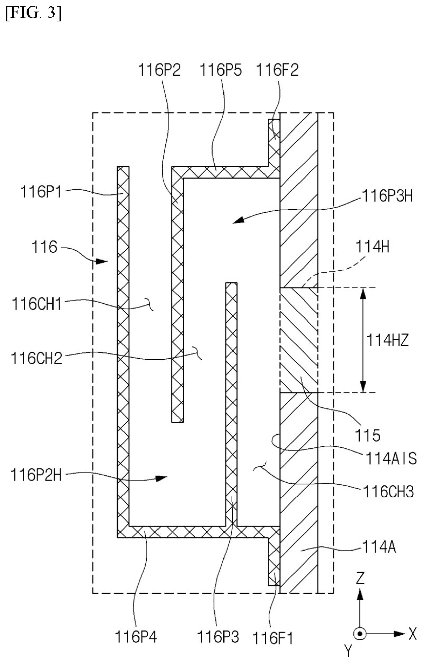

FIG. 1 is a top view showing a battery pack housing 100 according to exemplary embodiments. FIG. 2 is a cross-sectional view showing the battery pack housing 100 according to exemplary embodiments. FIG. 2 is a cross-sectional view taken along line A-A' of FIG. 1. FIG. 3 is an enlarged cross-sectional view of the battery pack housing 100 according to exemplary embodiments. FIG. 3 is an enlarged view of P1 in FIG. 2.

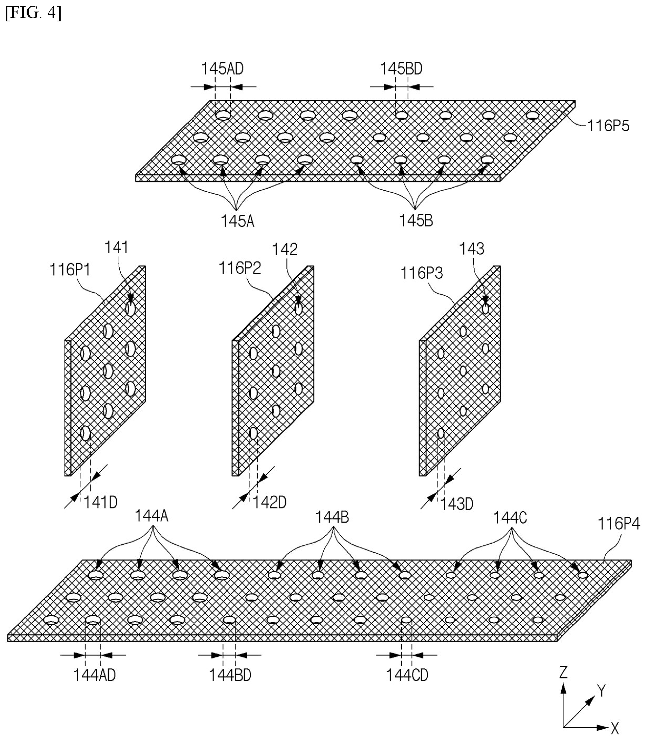

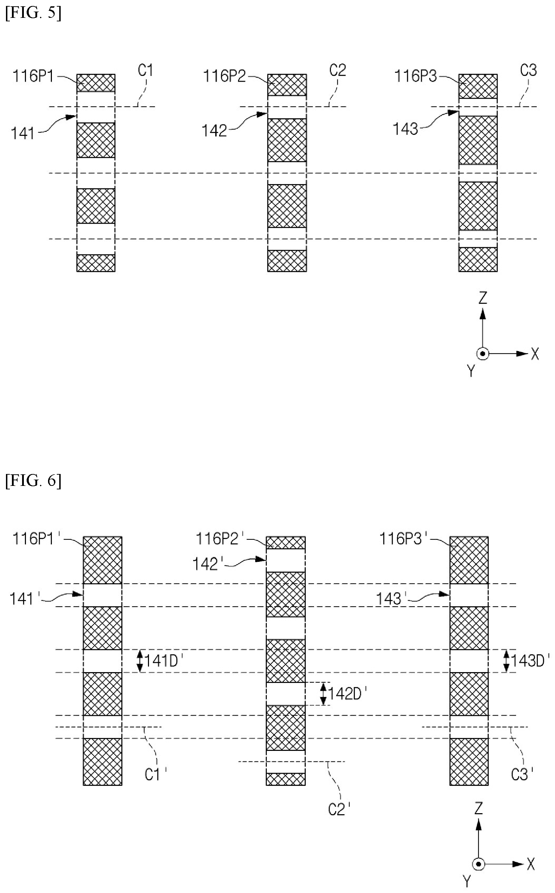

FIG. 4 is an exploded perspective view showing first to fifth plates 116P1, 116P2, 116P3, 116P4, 116P5 of a protector 116 according to exemplary embodiments. FIG. 5 is a cross-sectional view showing first to third plates 116P1, 116P2, 116P3 of the protector 116 according to exemplary embodiments.

Referring to FIGS. 1 to 5, the battery pack housing 100 may include a base plate 111B, a center beam 112, cross beams 113, side walls 114A, 114B, 114C, 114D, a venting device 115, and a protector 116.

Two directions substantially parallel to a mounting surface of the base plate 111B are defined as an X direction and a Y direction, and a direction substantially perpendicular to the mounting surface of the base plate 111B is defined as a Z direction. Each of the X direction, Y direction, and Z direction may be substantially perpendicular to each other. Unless otherwise specified, the definition of directions is the same for the following drawings.

The center beam 112 may extend in the X direction. The center beam 112 may be at a central part of the base plate 111B. The cross beams 113 may extend in the Y direction. Each of the cross beams 113 may intersect with the center beam 112. The center beam 112 may separate battery cell assemblies mounted inside the battery pack housing 100 in the Y direction. Each of the cross beams 113 may separate battery cell assemblies mounted inside the battery pack housing 100 in the X direction.

The side walls 114A, 114B, 114C, 114D may horizontally surround the center beam 112 and the cross beams 113. Each of the side walls 114A, 114B, 114C, 114D may be substantially perpendicular to the base plate 111B. Each of the side walls 114A, 114B, 114C, 114D may be positioned on an edge of the base plate 111B. The side wall 114A may include venting holes 114H.

The venting device 115 may be coupled to each of the venting holes 114H of the side wall 114A. The venting device 115 may enable opening and closing of each of the venting holes 114H that accommodate the venting device 115. According to exemplary embodiments, the venting device 115 may be a valve. When a fire event is detected inside the battery pack housing 100, the venting device 115 may be configured to open. High-temperature gas and combustion byproducts generated by the fire inside the battery pack housing 100 may be discharged to the outside of the battery pack housing 100 through the venting device 115.

The protector 116 may be disposed inside the battery pack housing 100. The protector 116 may overlap with the venting device 115 in the X direction. The protector 116 may be coupled to the inner surface 114AIS of the side wall 114A. However, the coupling position of the protector 116 is not limited thereto. According to exemplary embodiments, the protector 116 may be coupled to an upper surface of the base plate 111B or a lower surface of a lid plate 111T.

According to exemplary embodiments, a length of the protector 116 in the Z direction may be greater than a length 114HZ of the venting hole 114H in the Z direction. According to exemplary embodiments, a length of the protector 116 in the Z direction may be substantially equal to a length 114HZ of the venting hole 114H in the Z direction.

The protector 116 may include first to fifth plates 116P1, 116P2, 116P3, 116P4, 116P5. Each of the first plate 116P1, the second plate 116P2, and the third plate 116P3 may extend in the Z direction. The first plate 116P1, the second plate 116P2, and the third plate 116P3 may be spaced apart from each other in the X direction. The first plate 116P1, the second plate 116P2, and the third plate 116P3 may be substantially parallel to each other.

The fourth plate 116P4 may connect the first plate 116P1 and the third plate 116P3 in the X direction. The fourth plate 116P4 may be substantially perpendicular to the first plate 116P1. The fourth plate 116P4 may be substantially perpendicular to the third plate 116P3. The fourth plate 116P4 may extend in the X direction to the inner surface 114AIS of the side wall 114A. According to exemplary embodiments, the fourth plate 116P4 may be spaced apart from the second plate 116P2 in the Z direction. The fourth plate 116P4 may be connected with a coupling part 116F1.

The fifth plate 116P5 may extend in the X direction from the second plate 116P2 to the inner surface 114AIS of the side wall 114A. The fifth plate 116P5 may be substantially perpendicular to the second plate 116P2. According to exemplary embodiments, the fifth plate 116P5 may be spaced apart from the third plate 116P3 in the Z direction. The fifth plate 116P5 may be connected with a coupling part 116F2.

The coupling parts 116F1, 116F2 may be coupled on the inner surface 114AIS of the side wall 114A. The protector 116 may be coupled to the side wall 114A by the coupling parts 116F1, 116F2. Each of the coupling parts 116F1, 116F2 may extend in the Z direction on the inner surface 114AIS of the side wall 114A.

The protector 116 may include channels therein. According to exemplary embodiments, the channels inside the protector 116 may have a maze structure. The protector 116 may include a first vertical channel 116CH1, a second vertical channel 116CH2, and a third vertical channel 116CH3. The first vertical channel 116CH1 may be defined by the first plate 116P1 and the second plate 116P2. The second vertical channel 116CH2 may be defined by the second plate 116P2 and the third plate 116P3. The third vertical channel 116CH3 may be defined by the third plate 116P3 and the side wall 114A. The third vertical channel 116CH3 may overlap with the venting hole 114H of the side wall 114A in the X direction.

The second plate 116P2 may include a connection hole 116P2H. The first vertical channel 116CH1 and the second vertical channel 116CH2 may be connected through the connection hole 116P2H. The third plate 116P3 may include a connection hole 116P3H. The second vertical channel 116CH2 and the third vertical channel 116CH3 may be connected through the connection hole 116P3H.

However, the structure of the internal channels of the protector 116 is not limited to the above-described structure. According to exemplary embodiments, the protector 116 may have internal channels with a zigzag structure. According to exemplary embodiments, the protector 116 may have a circular maze shape.

Each of the first to fifth plates 116P1, 116P2, 116P3, 116P4, 116P5 may include a heat-resistant material. According to exemplary embodiments, each of the first to fifth plates 116P1, 116P2, 116P3, 116P4, 116P5 may include one or more of high-temperature alloy, ceramic, and refractory material. According to exemplary embodiments, each of the first to fifth plates 116P1, 116P2, 116P3, 116P4, 116P5 may include aluminum (Al). According to exemplary embodiments, each of the first to fifth plates 116P1, 116P2, 116P3, 116P4, 116P5 may include steel.

When a fire event occurs inside the battery pack housing 100, high-temperature gas and combustion byproducts inside the battery pack housing 100 may pass through the protector 116 and be discharged to the outside of the battery pack housing 100 through the venting device 115. Arrows without reference numerals in FIG. 2 indicate the flow of gas passing through the internal channels 116CH1, 116CH2, 116CH3 of the protector 116. The protector 116 includes the first vertical channel 116CH1, the second vertical channel 116CH2, and the third vertical channel 116CH3, thereby extending the flow path of heat. Sparks or flames inside the battery pack housing 100 may collide with the first to fifth plates 116P1, 116P2, 116P3, 116P4, 116P5 while passing through the internal vertical channels 116CH1, 116CH2, 116CH3 of the protector 116 and be dissipated. Sparks or flames inside the battery pack housing 100 may naturally extinguish due to the extended flow path inside the protector 116. In addition, the extended flow path inside the protector 116 may prevent or limit oxygen inflow from outside to inside the battery pack housing 100. As a result, internal ignition of the battery pack housing 100 can be delayed, and flame leakage from the inside to the outside of the battery pack housing 100 can be prevented.

Each of the first to fifth plates 116P1, 116P2, 116P3, 116P4, 116P5 may include a plurality of holes.

Referring to FIG. 4, the first plate 116P1 may include first holes 141. Each of the first holes 141 may have a first diameter 141D. The second plate 116P2 may include second holes 142. Each of the second holes 142 may have a second diameter 142D. The third plate 116P3 may include third holes 143. Each of the third holes 143 may have a third diameter 143D. According to exemplary embodiments, the first diameter 141D of each of the first holes 141 may be larger than the second diameter 142D of each of the second holes 142. According to exemplary embodiments, the second diameter 142D of each of the second holes 142 may be larger than the third diameter 143D of each of the third holes 143.

The diameter 141D of each of the first holes 141 may be smaller than a length 114HZ of the venting hole 114H along the Z direction. According to exemplary embodiments, the diameter 141D of each of the first holes 141 may be about 0.5 times or more and about 0.7 times or less of the length 114HZ of the venting hole 114H along the Z direction. The diameter 142D of each of the second holes 142 may be smaller than the length 114HZ of the venting hole 114H along the Z direction. According to exemplary embodiments, the diameter 142D of each of the second holes 142 may be about 0.5 times or more and about 0.7 times or less of the length 114HZ of the venting hole 114H along the Z direction. The diameter 143D of each of the third holes 143 may be smaller than the length 114HZ of the venting hole 114H along the Z direction. According to exemplary embodiments, the diameter 143D of each of the third holes 143 may be about 0.5 times or more and about 0.7 times or less of the length 114HZ of the venting hole 114H along the Z direction.

The fourth plate 116P4 may include fourth holes 144A, 144B, 144C. The fourth holes 144A may overlap with the first vertical channel 116CH1 in the Z direction. The fourth holes 144B may overlap with the second vertical channel 116CH2 in the Z direction. The fourth holes 144C may overlap with the third vertical channel 116CH3 in the Z direction. Each of the fourth holes 114A may have a diameter 114AD. Each of the fourth holes 114B may have a diameter 114BD. Each of the fourth holes 114C may have a diameter 114CD. The diameter 114AD of each of the fourth holes 114A may be larger than the diameter 114BD of each of the fourth holes 114B. The diameter 114BD of each of the fourth holes 114B may be larger than the diameter 114CD of each of the fourth holes 114C. According to exemplary embodiments, the size of each diameter 144AD, 144BD, 144CD of the fourth holes 144A, 144B, 144C may decrease as it approaches the venting device 115 in the X direction.

Each diameter 144AD, 114BD, 144CD of the fourth holes 144A, 144B, 144C may be smaller than the length 114HZ of the venting hole 114H along the Z direction. According to exemplary embodiments, each diameter 144AD, 114BD, 144CD of the fourth holes 144A, 144B, 144C may be about 0.5 times or more and about 0.7 times or less of the length 114HZ of the venting hole 114H along the Z direction.

The fifth plate 116P5 may include fifth holes 145A, 145B. The fifth holes 145A may overlap with the second vertical channel 116CH2 in the Z direction. The fifth holes 145B may overlap with the third vertical channel 116CH3 in the Z direction. Each of the fifth holes 145A may have a diameter 145AD. Each of the fifth holes 145B may have a diameter 145BD. The diameter 145AD of each of the fifth holes 145A may be larger than the diameter 145BD of each of the fifth holes 145B. According to exemplary embodiments, each diameter 145AD, 145BD of the fifth holes 145A, 145B may decrease as it approaches the venting device 115 in the X direction.

Each diameter 145AD, 145BD of the fifth holes 145A, 145B may be smaller than the length 114HZ of the venting hole 114H along the Z direction. According to exemplary embodiments, each diameter 145AD, 145BD of the fifth holes 145A, 145B may be about 0.5 times or more and about 0.7 times or less of the length 114HZ of the venting hole 114H along the Z direction.

Referring to FIG. 5, each of the first holes 141 may overlap with a corresponding one of the second holes 142 in the X direction. Each of the second holes 142 may overlap with a corresponding one of the third holes 143 in the X direction. Each of the first holes 141 of the first plate 116P1 may have a first central axis C1. Each of the second holes 142 of the second plate 116P2 may have a second central axis C2. Each of the third holes 143 of the third plate 116P3 may have a third central axis C3. According to exemplary embodiments, the first central axis C1, the second central axis C2, and the third central axis C3 may coincide.

Gas inside the battery pack housing 100 may pass through the internal channels 116CH1, 116CH2, 116CH3 of the protector 116 and be discharged to the outside through the venting device 115. When an ignition event occurs inside the battery pack housing 100, high-temperature gas and combustion byproducts may be generated inside the battery pack housing 100. The high-temperature gas and combustion byproducts inside the battery pack housing 100 may collide with the first to fifth plates 116P1, 116P2, 116P3, 116P4, 116P5 and pass through the internal channels 116CH1, 116CH2, 116CH3. The protector 116 according to the present disclosure includes the first holes 141 of the first plate 116P1, the second holes 142 of the second plate 116P2, the third holes 143 of the third plate 116P3, the fourth holes 144A, 144B, 144C of the fourth plate 116P4, and the fifth holes 145A, 145B of the fifth plate 116P5, so that when gas inside the battery pack housing 100 passes through the protector 116, combustion byproducts contained in the gas can be discharged to the outside of the protector 116 through the holes 141, 142, 143, 144A, 144B, 144C, 145A, 145B. This can prevent a problem where combustion byproducts accumulate inside the protector 116 and block the internal channels 116CH1, 116CH2, 116CH3.

According to exemplary embodiments, the first to fifth holes 141, 142, 143, 144A, 144B, 144C, 145A, 145B may have diameters that decrease as they approach the venting device 115 in the X direction. The protector 116 includes the first to fifth holes 141, 142, 143, 144A, 144B, 144C, 145A, 145B of different sizes, so that dust particles of various sizes contained in the gas inside the battery pack housing 100 can be removed. The flow of gas passing through the vertical channels 116CH1, 116CH2, 116CH3 of the protector 116 can be maintained, while the problem of the venting device 115 and the vertical channels 116CH1, 116CH2, 116CH3 of the protector 116 being blocked by combustion byproducts such as dust can be resolved.

### (Second embodiment)

FIG. 6 is a perspective view and cross-sectional view showing a portion of first to third plates 116P1', 116P2', 116P3' of a protector 116' according to exemplary embodiments.

Hereinafter, the configurations of the second embodiment that differ from the first embodiment will be mainly described. The description above in FIGS. 1 to 5 may be applied to the remaining configurations.

Referring to FIG. 6, the first plate 116P1' may include first holes 141' each having a first diameter 141D'. The second plate 116P2' may include second holes 142' each having a second diameter 142D'. The third plate 116P3' may include third holes 143' each having a third diameter 143D'. According to exemplary embodiments, the size of the first diameter 141D' may be substantially equal to the size of the second diameter 142D'. According to exemplary embodiments, the size of the second diameter 142D' may be substantially equal to the size of the third diameter 143D'.

Each of the first holes 141' may have a central axis C1'. Each of the second holes 142' may have a central axis C2'. Each of the third holes 143' may have a central axis C3'. According to exemplary embodiments, the central axis C1' of each of the first holes 141' may not be aligned with the central axis C2' of each of the second holes 142' in the Z direction. According to exemplary embodiments, the central axis C2' of each of the second holes 142' may not be aligned with the central axis C3' of each of the third holes 143' in the Z direction. According to exemplary embodiments, each of the first holes 141' may not overlap with each of the second holes 142' in the X direction. According to exemplary embodiments, each of the second holes 142' may not overlap with each of the third holes 143' in the X direction.

High-temperature gas and combustion byproducts passing through the protector 116 may collide with the internal plates 116P1', 116P2', 116P3' in irregular directions. The protector 116 includes the first holes 141' of the first plate 116P1', the second holes 142' of the second plate 116P2', and the third holes 143' of the third plate 116P3' that are not aligned with each other in the X direction, so that combustion byproducts contained in the gas can be efficiently discharged to the outside of the protector 116. As a result, blockage due to accumulation of combustion byproducts inside the venting device 115 or inside the protector 116 can be prevented.

### (Third embodiment)

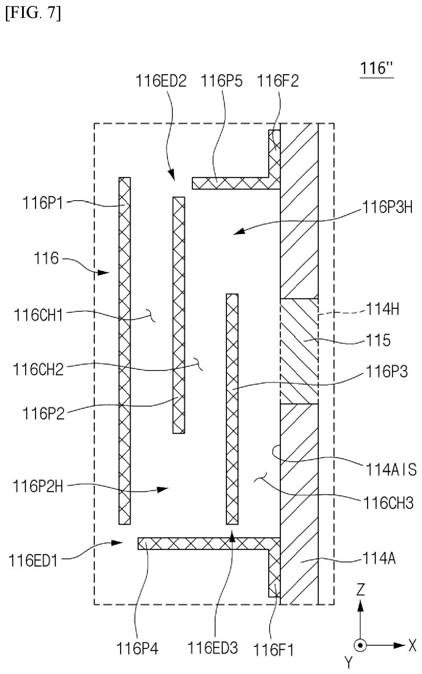

FIG. 7 is a cross-sectional view showing a protector 116'' according to exemplary embodiments.

In FIG. 7, the configurations having the same reference numerals as in FIGS. 1 to 5 may have the description above in the first embodiment applied, and the same description will be omitted. Hereinafter, the configurations of the third embodiment that differ from the first embodiment will be mainly described.

Referring to FIG. 7, the protector 116'' may include a first edge part 116ED1 where the first plate 116P1 and the fourth plate 116P4 are connected, a second edge part 116ED2 where the second plate 116P2 and the fifth plate 116P5 are connected, and a third edge part 116ED3 where the third plate 116P3 and the fourth plate 116P4 are connected.

Each of the first edge part 116ED1, the second edge part 116ED2, and the third edge part 116ED3 may include a dust discharge hole. The dust discharge hole in each of the first edge part 116ED1, the second edge part 116ED2, and the third edge part 116ED3 may prevent combustion byproducts such as dust contained in the gas passing through the internal channels 116CH1, 116CH2, 116CH3 from accumulating in the first edge part 116ED1, the second edge part 116ED2, and the third edge part 116ED3. As a result, blockage due to accumulation of combustion byproducts inside the protector 116 can be prevented. Each of the first to fifth plates 116P1, 116P2, 116P3, 116P4, 116P5 may include the first to fifth holes described above in the first embodiment or the second embodiment.

### (Fourth embodiment)

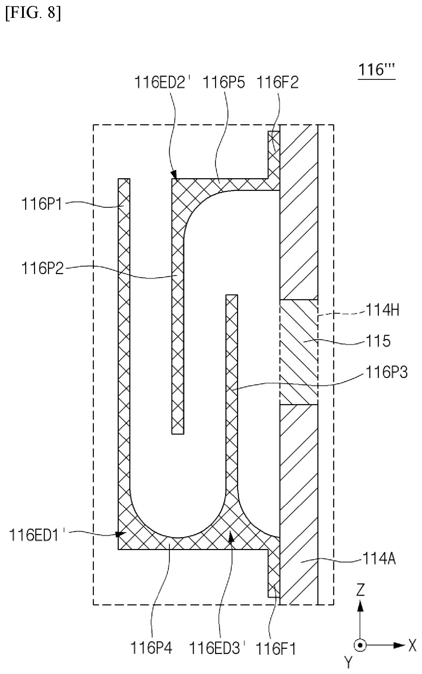

FIG. 8 is a cross-sectional view showing a protector 116‴ according to exemplary embodiments.

In FIG. 8, the configurations having the same reference numerals as in FIGS. 1 to 5 may have the description above in the first embodiment applied, and the same description will be omitted. Hereinafter, the configurations of the fourth embodiment that differ from the first embodiment will be mainly described.

Referring to FIG. 8, the protector 116‴ may include a first edge part 116ED1' where the first plate 116P1 and the fourth plate 116P4 are connected, a second edge part 116ED2' where the second plate 116P2 and the fifth plate 116P5 are connected, and a third edge part 116ED3' where the third plate 116P3 and the fourth plate 116P4 are connected.

Each of the first edge part 116ED1', the second edge part 116ED2', and the third edge part 116ED3' may have a rounded shape. The rounded shape of each of the first edge part 116ED1, the second edge part 116ED2, and the third edge part 116ED3 may prevent combustion byproducts such as dust contained in the gas passing through the internal channels 116CH1, 116CH2, 116CH3 from accumulating in the first edge part 116ED1', the second edge part 116ED2', and the third edge part 116ED3'. As a result, blockage due to accumulation of combustion byproducts inside the protector 116 can be prevented. Each of the first to fifth plates 116P1, 116P2, 116P3, 116P4, 116P5 may include the first to fifth holes described above in the first embodiment or the second embodiment.

### (Fifth embodiment)

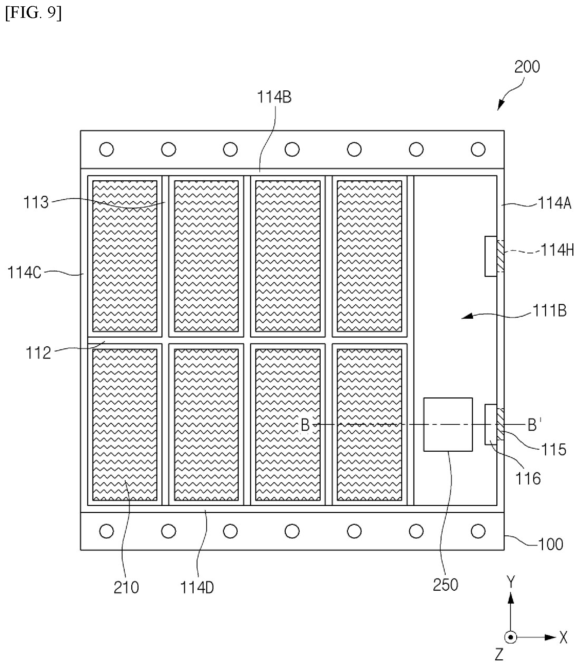

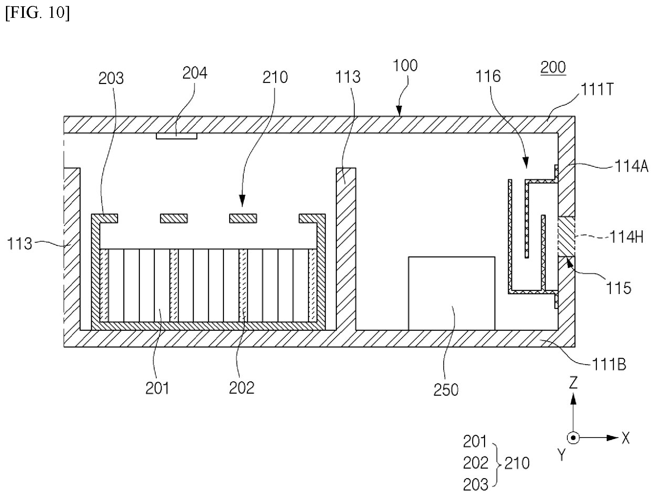

FIG. 9 is a top view showing a battery pack 200. FIG. 10 is a cross-sectional view showing the battery pack 200. FIG. 10 shows a cross section taken along line B-B' of FIG. 9.

In FIGS. 9 and 10, the configurations having the same reference numerals as in FIGS. 1 to 5 may have the description above in the first embodiment applied, and the same description will be omitted. Hereinafter, the configurations of the fifth embodiment that differ from the first embodiment will be mainly described.

The battery pack 200 may include a battery pack housing 100 and a plurality of battery cell assemblies 210 mounted in the battery pack housing 100.

Each of the battery cell assemblies 210 may include battery cells 201, separators 202 interposed between the battery cells, and a module frame 203 accommodating the battery cells 201 and the separators 202. The battery cell assemblies 210 may be separated from each other in the Y direction by the center beam 112. The battery cell assemblies 210 may be separated from each other in the X direction by the cross beams 113.

In this example, the battery cell assemblies 210 are arranged in 4 rows and 2 columns. Accordingly, it can be said that the battery cell assemblies 210 are arranged in 4 * 2. Those of ordinary skill in the art will be able to easily arrive at a battery pack including battery cell assemblies 210 arranged in M * N based on what is described herein. Here, each of M and N is any integer of 2 or more.

The battery cells 201 may be accommodated in an internal space of the battery pack housing 100. The battery cells 201 may be stacked in the X direction. According to exemplary embodiments, each of the plurality of battery cells 201 may be bidirectional cells. That is, a positive terminal of each of the plurality of battery cells 201 may be disposed at one end of each, and a negative terminal of each of the plurality of battery cells 201 may be disposed at the other end of each. Those of ordinary skill in the art will be able to easily arrive at an embodiment in which each of the plurality of battery cells 201 is a unidirectional cell based on what is described herein.

Each of the plurality of battery cells 201 includes an electrode assembly, an electrolyte, and a case covering them. The case may be a pouch case or a prismatic case. The pouch case may include an aluminum laminate sheet. The prismatic case may include a metal material such as aluminum. The prismatic case may have a rectangular parallelepiped shape.

The electrode assembly embedded in the case may include a positive electrode, a negative electrode, and a separator interposed between the positive electrode and the negative electrode. The electrode assembly may be either a jelly-roll type or a stack-type depending on the assembly form. A jelly-roll type electrode assembly may include a wound structure of a positive electrode, a negative electrode, and a separator interposed therebetween. A stack-type electrode assembly may include a plurality of positive electrodes and a plurality of negative electrodes sequentially stacked, and a plurality of separators interposed therebetween.

The separators 202 may separate the battery cells 201. The separators 202 may be interposed between the battery cells 201 or may be disposed to contact the outermost battery cell among the battery cells 201 in the X direction. Each of the separators 202 may contact adjacent battery cells 201 on one side or both sides. The plurality of battery cells 201 and the plurality of separators 202 may form a cell stack.

The plurality of separators 202 may include a compressible material. The plurality of separators 202 may absorb swelling of the plurality of battery cells 201. The plurality of separators 202 may be thermal barriers. According to exemplary embodiments, each of the plurality of separators 202 may have a high melting temperature and low thermal conductivity. According to exemplary embodiments, each of the plurality of separators 202 may include flame-retardant materials such as ceramics and coated glass materials. According to exemplary embodiments, the plurality of separators 202 may be configured to release fire retarding material and fire extinguishing agent when a thermal runaway event occurs.

A sensor 204 may be located inside the battery pack housing 100. The sensor 204 may be configured to detect the internal environment of the battery pack housing 100. According to exemplary embodiments, the sensor 204 may be a temperature sensor. According to exemplary embodiments, the sensor 204 may be a pressure sensor. The sensor 204 may detect an ignition event inside the battery pack 200. For example, when an ignition event occurs in one of the battery cell assemblies 210 and the internal temperature of the battery pack 200 rises above a reference temperature, the sensor 204 may detect this. The battery pack 200 may include one sensor or two or more sensors.

A BMS (Battery Management System) 250 may monitor the battery cell assemblies 210. The BMS 250 may be configured to monitor data collected from the sensor 204. The BMS 250 may be configured to control the venting device 115 based on data collected from the sensor 204.

According to exemplary embodiments, when an ignition event is detected inside the battery pack 200, the BMS 250 may be configured to generate an opening signal for the venting device 115 to open the venting hole 114H. According to exemplary embodiments, the BMS 250 may detect an ignition event when the temperature inside the battery pack 200 is above a reference temperature. According to exemplary embodiments, the BMS 250 may detect an ignition event when the pressure inside the battery pack 200 is above a reference pressure.

Heat and high-temperature gas inside the battery pack 200 may flow along the internal channels of the protector 116 and be discharged through the venting hole 114H. By securing an extended flow path inside the protector 116, flames, sparks, etc. may collide with the plates of the protector and naturally extinguish. As a result, flame exposure to the outside of the battery pack 200 can be suppressed, and the ignition speed inside the pack can be delayed.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A battery pack housing comprising:
a base plate;
a side wall perpendicular to the base plate;
a venting device installed in a venting hole of the side wall; and
a protector overlapping the venting device in a first direction and installed on an inner surface of the side wall, wherein
the protector comprises first to third plates extending in a second direction perpendicular to an upper surface of the base plate, wherein
the first plate comprises a plurality of first holes each having a first diameter,
the second plate comprises a plurality of second holes each having a second diameter, and
the third plate comprises a plurality of third holes each having a third diameter.

2. The battery pack housing of claim 1, wherein
the protector further comprises:
a first vertical channel between the first plate and the second plate;
a second vertical channel between the second plate and the third plate; and
a third vertical channel between the third plate and the side wall.

3. The battery pack housing of claim 2, wherein
the second plate comprises a first connection hole connecting the first and second vertical channels, and
the third plate comprises a second connection hole connecting the second and third vertical channels, wherein
the first connection hole and the second connection hole are spaced apart in the second direction.

4. The battery pack housing of claim 1, wherein
the size of the first diameter, the size of the second diameter, and the size of the third diameter are equal to each other.

5. The battery pack housing of claim 4, wherein
a central axis of each of the first holes is spaced apart from a central axis of each of the second holes in the second direction, and
a central axis of each of the second holes is spaced apart from a central axis of each of the third holes in the second direction.

6. The battery pack housing of claim 1, wherein
the first diameter is larger than the second diameter, and
the second diameter is larger than the third diameter.

7. The battery pack housing of claim 6, wherein
each of the plurality of first holes overlaps with a corresponding one of the plurality of second holes and a corresponding one of the plurality of third holes in the first direction.

8. The battery pack housing of claim 1, wherein
each of the first diameter, the second diameter, and the third diameter has a size of 0.5 times or more and 0.7 times or less of a length of the venting hole of the side wall in the second direction.

9. The battery pack housing of claim 1, wherein
the protector comprises:
a fourth plate connecting the first plate and the third plate and extending in the first direction to the inner surface of the side wall; and
a fifth plate extending in the first direction from the second plate to the inner surface of the side wall, wherein
the fourth plate and the fifth plate are spaced apart in the second direction,
the fourth plate comprises a plurality of fourth holes, and
the fifth plate comprises a plurality of fifth holes.

10. The battery pack housing of claim 9, wherein
a diameter of each of the plurality of fourth holes of the fourth plate decreases as it approaches the venting device in the first direction, and
a diameter of each of the plurality of fifth holes of the fifth plate decreases as it approaches the venting device in the first direction.

11. The battery pack housing of claim 9, wherein
the protector further comprises:
a first edge part where the first plate and the fourth plate meet;
a second edge part where the second plate and the fifth plate meet; and
a third edge part where the third plate and the fourth plate meet, wherein
each of the first edge part, the second edge part, and the third edge part has a rounded shape.

12. The battery pack housing of claim 9, wherein
the protector further comprises:
a first edge part where the first plate and the fourth plate meet;
a second edge part where the second plate and the fifth plate meet; and
a third edge part where the third plate and the fourth plate meet, wherein
each of the first edge part, the second edge part, and the third edge part comprises a dust discharge hole.

13. The battery pack housing of claim 9, further comprising:
a first fixing part perpendicular to and connected with the fourth plate; and
a second fixing part perpendicular to and connected with the fifth plate, wherein
each of the first fixing part and the second fixing part is fixed on the inner surface of the side wall.
